**Europäisches Patentamt**

**European Patent Office**

**Office européen des brevets**

(11) Veröffentlichungsnummer: **0 651 222 A2**

# (12) EUROPÄISCHE PATENTANMELDUNG

(21) Anmeldenummer: **94116800.7**

(22) Anmeldetag: **25.10.94**

(51) Int. Cl.6: **F28F 19/00**, F28F 13/00, F28F 21/04

(30) Priorität: **03.11.93 DE 4337471**

(43) Veröffentlichungstag der Anmeldung: **03.05.95 Patentblatt 95/18**

(84) Benannte Vertragsstaaten: **DE FR GB IT NL SE**

(71) Anmelder: **Hoechst CeramTec Aktiengesellschaft Lorenzreuther Strasse 2 D-95615 Marktredwitz (DE)**

(72) Erfinder: **Ganz, Rudolf, Dr. Wiesenstrasse 15a D-91207 Lauf (DE)**
Erfinder: **Rosenfelder, Ottmar, Dr. Lindenfelsstrasse 40 D-95100 Selb (DE)**
Erfinder: **Schwandner, Barbara, Dr. Reuthbergsiedlung 2 D-95100 Selb (DE)**

(74) Vertreter: **Hoffmann, Peter, Dipl.-Chem. c/o Hoechst AG, Zentrale Patentabteilung, Gebäude F 821 D-65926 Frankturt am Main (DE)**

(54) **Verfahren zum Betreiben von Wärmetauschern.**

(57) Bei dem Verfahren zum Betreiben von Wärmeaustauschern mittels Heißgasströmen mit kondensationsfähigen Komponenten wird der Heißgasstrom (1) durch Hindernisse (3) mit einer Temperatur T, die klein gegen die Eintrittstemperatur $T_E$ des Heißgasstromes (1), insbesondere kleiner als die Taupunktstemperatur $T_T$ des Heißgasstromes (1) ist, in Teilströme (4) aufgeteilt und abgekühlt. Die Teilströme (4) werden nach Verlassen der Hindernisse (3) untereinander zusammengeführt und in ihren Kernen (8) durch weitere Hindernisse (3) mit der Temperatur T in andere Teilströme (6) aufgeteilt und abgekühlt. Dieser Vorgang wird so oft wiederholt, bis der den Wärmetauscher (2) verlassende Heißgasstrom (7) eine Austrittstemperatur $T_A$ von 200°C bis 60°C, vorzugsweise von 120°C bis 80°C erreicht hat.

Die Erfindung betrifft ein Verfahren zum Betreiben von Wärmetauschern mittels Heißgasströmen, die kondensationsfähige Komponenten aufweisen. Verfahren der genannten Art sind bekannt. Bei diesen Verfahren nach der sogenannten Heizwert-Technik wird durch entsprechende Verfahrensführung das Unterschreiten des Taupunktes vermieden, um Korrosion durch Kondensatbildung am Wärmetauscher oder im abgasführenden System zu verhindern. Dabei muß auf die im Heißgas latent gespeicherte Wärme verzichtet werden, die je nach Gehalt an kondensationsfähigen Komponenten beträchtlich sein kann (z.B. ca. 11 % beim Verbrennen von Erdgas L und ca. 6 % beim Verbrennen von Heizöl EL).

Nach einem anderen Verfahren, der sogenannten Brennwert-Technik, wird versucht, die im Heißgas enthaltene Latentwärme weitgehend zu nutzen. Dabei werden die Heißgase unter ihren Taupunkt abgekühlt. Bezogen auf die Zusammensetzung des Heißgases bei Eintritt in den Wärmetauscher liegt der Taupunkt für Erdgas L bei ca. 57°C und für Erdöl EL bei ca. 48°C. Das entstehende Kondensat, im wesentlichen Wasser, enthält u.a. Schadstoffe, wie schweflige-, salpetrige- und Kohlensäure, die das Kondensat deutlich sauer machen. Der Säuregrad liegt je nach Primärenergieart (Öl, Gas, Industriegase, Prozeßgase etc.) zwischen 1,5<pH<5,5. Da die Kondensation in den Wärmetauschern in der Regel nicht vollständig ist, enthält das abgekühlte Heißgas noch kondensationsfähige Komponenten, die in das abgasführende System gelangen. Bei diesem Verfahren muß also nicht nur der Wärmetauscher sondern auch das abgasführende System säurefest ausgelegt werden, um Korrosionsschäden durch das Kondensat zu vermeiden. Dies bedeutet in vielen Anwendungsfällen, insbesondere bei der Substitution bestehender Anlagen, die nach der Heizwert-Technik arbeiten, durch solche, die nach der Brennwert-Technik arbeiten, eine erhebliche, häufig die Kundenakzeptanz übersteigende Verteuerung der Systemkosten. Dies gilt ganz besonders für Anlagen, die mit Heizöl betrieben werden, das im Gegensatz zu Erdgas nicht entschwefelt ist, und somit das Heizölkondensat deutlich aggresiver ist als Erdgaskondensat.

Hier will die Erfindung Abhilfe schaffen.

Die Aufgabe wird durch ein Verfahren der eingangs genannten Art gelöst, das dadurch gekennzeichnet ist, daß der Heißgasstrom durch Hindernisse mit einer Temperatur T, die klein gegen die Eintrittstemperatur $T_E$ des Heißgasstromes, insbesondere kleiner als die Taupunktstemperatur $T_T$ des Heißgasstromes ist, in Teilströme aufgeteilt und abgekühlt wird, die Teilströme nach Verlassen der Hindernisse untereinander zusammen geführt und in ihren Kernen durch weitere Hindernisse in andere Teilströme aufgeteilt und abgekühlt werden, wobei dieser Vorgang so oft wiederholt wird, bis der den Wärmetauscher verlassende Heißgasstrom eine Austrittstemperatur $T_A$ von 200°C bis 60°C, vorzugsweise von 120°C bis 65°C, insbesondere von 100°C bis 70°C, erreicht hat.

Die Vorteile des Verfahrens sind im wesentlichen darin zu sehen, daß ein beträchtlicher Teil der im Heißgas vorhandenen Kondensationsenergie genutzt werden kann, ohne daß der konventionelle, nicht korrosionsresistente bzw. nicht versottungsfeste Kamin ersetzt werden muß. Aufgrund der Verwirbelungen des Heißgases und des dabei erzielten besseren Wärmeübergangs wird das Heißgas so weit getrocknet, daß eine weitere merkliche Kondensation erst bei Temperaturen weit unterhalb des Taupunktes, bezogen auf die Zusammensetzung des Heißgases bei Eintritt in den Wärmetauscher, erfolgt.

Im folgenden wird das erfindungsgemäße Verfahren anhand der Figur, einer schematischen Darstellung des Strömungsweges im Wärmetauscher, näher erläutert.

Ein Wasserdampf enthaltender Heißgasstrom 1 mit einer Temperatur von 150°C bis 1400°C wird in den Wärmetauscher 2 geleitet. Im Wärmetauscher 2 trifft der Heißgasstrom 1 auf Hindernisse 3, die auf einer Temperatur T gehalten werden, die klein gegen die Eintrittstemperatur $T_E$ des Heißgasstromes 1, insbesondere kleiner als die Taupunktstemperatur $T_T$ des Heißgasstromes 1 ist. Die Hindernisse weisen bevorzugt eine hohe Wärmeleitfähigkeit und eine rauhe Oberfläche auf. Insbesondere ist die Wärmeleitfähigkeit der Hindernisse WLF $\geq$ 60 W/mK und die Rauhheit der Hindernisse $R_a \geq$ 2 $\mu$m. Durch die Hindernisse 3 wird der Heißgasstrom 1 in Teilströme 4 aufgeteilt, gekühlt und nach Verlassen der Hindernisse 3 mit benachbarten Teilströmen 4 zusammengeführt, wodurch neue Heißgasströme 5 gebildet werden, die in ihren Kernen 8 an den Hindernissen 3 in Teilströme 6 aufgeteilt und gekühlt werden. Dieser Vorgang wird so oft wiederholt, bis der den Wärmetauscher 2 verlassende Heißgasstrom 7 eine Austrittstemperatur $T_A$ von 200°C bis 60°C, vorzugsweise von 120°C bis 65°C, insbesondere von 100°C bis 70°C, aufweist.

Wärmetauscher, die erfindungsgemäß eingesetzt werden können, sind in DE 40 22 654, DE 42 38 190, DE 42 38 191 und in DE 42 38 192 beschrieben.

Bei Anwendung des erfindungsgemäßen Verfahrens können bereits bei Heißgas-Austrittstemperaturen von 200°C etwa 10 bis 70 % des im Heißgas enthaltenen Wasserdampfes kondensiert sein. Bei erfindungsgemäßem Betrieb werden Kondensationsleistungen, gemessen in % der theoretisch möglichen Kondensationsleistung, bis zu 100 % erzielt.

Beispiele:

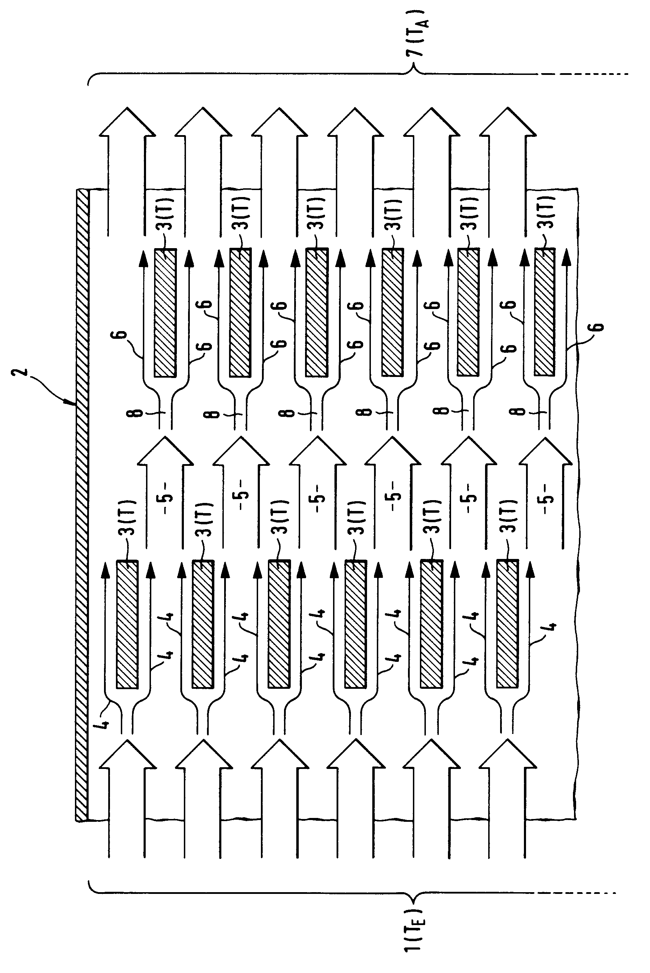

Es wurde ein keramischer Wärmetauscher aus dem Werkstoff Siliziuminfiltriertem Siliziumkarbid eingesetzt mit Außenabmessungen von 300 mm Breite, 300 mm Höhe und 150 mm Tiefe und mit einer heißgasseitigen Wärmetauschfläche von 3,2 m$^2$. Dieser Wärmetauscher wird in DE 42 38 190 näher beschrieben und hat einen Aufbau gemäß Figur 1. Die Wärmeleitfähigkeit des Wärmetauscherwerkstoffes betrug bei 100°C etwa 90 bis 100 W/mK. Die Rauheit der Oberflächen der im Wärmetauscher vorhandenen Hindernisse wurde mit mehreren Messungen im Bereich von $R_a$ 5 bis 12 $\mu$m bestimmt. Der Kühlwasser-strom betrug jeweils 3 m$^3$/h und wurde im 5-fach-Kreuz-Gegenstrombetrieb mittels wasserseitigen Umlenkhauben geführt. Das Heißgas wurde als Erdgas L-Abgas im wesentlichen gerade durch den Wärmetauscher geleitet. Der Taupunkt lag bei etwa 57°C. Es wurden die Meßergebnisse der Tabelle 1 erzielt.

**Tabelle 1: Meßergebnisse beim Betrieb des Wärmetauschers**

| Beispiel | Kühlwasser | | Heißgas | | | Leistung | |
|---|---|---|---|---|---|---|---|
| | $T_{ein}$ [°C] | $T_{aus}$ [°C] | $T_{ein}$ [°C] | $T_{aus}$ [°C] | Massenstrom [kg/h] | Kondensation [kW] | Gesamt [kW] |
| 1 | 60 | 75 | 500 | 105 | 540 | 0 | 65 |
| 2 | 10 | 20 | 500 | 45 | 358 | 3,8 | 49 |
| 3 | 10 | 30 | 1000 | 56 | 275 | 9,3 | 88 |
| 4 | 10 | 31 | 750 | 70 | 447 | 7,2 | 99 |
| 5 | 10 | 38 | 751 | 96 | 631 | 6,9 | 131 |
| 6 | 10 | 47 | 1200 | 102 | 452 | 12,9 | 173 |

Beispiel 1 verdeutlicht als Vergleichsbeispiel das Ausbleiben der Kondensation bei zu hohen Kühlwassertemperaturen. Die Beispiele 2 bis 6 führen die Meßbedingungen und -ergebnisse in Brennwert-Technik auf. Bei den Beispielen 2 und 3 liegt die Heißgas-Austrittstemperatur außerhalb des erfindungsgemäßen Temperaturbereiches. Die erfindungsgemäßen Beispiele 4 bis 6 weisen eine Kondensationsleistung auf, die trotz des für diesen Wärmetauscher sehr hohen Heißgasmassenstromes schon vergleichsweise hoch ist.

4

**Patentansprüche**

1. Verfahren zum Betreiben von Wärmetauschern mittels Heißgasströmen mit kondensationsfähigen Komponenten, dadurch gekennzeichnet, daß der Heißgasstrom (1) durch Hindernisse (3) mit einer Temperatur T, die klein gegen die Eintrittstemperatur $T_E$ des Heißgasstromes (1), insbesondere kleiner als die Taupunktstemperatur $T_T$ des Heißgasstromes (1) ist, in Teilströme (4) aufgeteilt und abgekühlt wird, die Teilströme (4) nach Verlassen der Hindernisse (3) untereinander zusammengeführt und in ihren Kernen (8) durch weitere Hindernisse (3) mit der Temperatur T in andere Teilströme (6) aufgeteilt und abgekühlt werden, wobei dieser Vorgang so oft wiederholt wird, bis der den Wärmetauscher (2) verlassende Heißgasstrom (7) eine Austrittstemperatur $T_A$ von 200°C bis 60°C, vorzugsweise von 120°C bis 65°C, insbesondere von 100°C bis 70°C, erreicht hat.

2. Verfahren zum Betreiben von Wärmetauschern gemäß Anspruch 1, dadurch gekennzeichnet, daß die Hindernisse (3) eine Wärmeleitfähigkeit WLF $\geq$ 60 W/m•K aufweisen.

3. Verfahren zum Betreiben von Wärmetauschern gemäß Anspruch 1 oder 2, dadurch gekennzeichnet, daß die Hindernisse (3) eine Oberflächenrauheit $R_a \geq 2\ \mu$m aufweisen.